# EUROPÄISCHE PATENTSCHRIFT

(11) **EP 3 439 831 B1**
(45) Veröffentlichungstag und Bekanntmachung des Hinweises auf die Patenterteilung: **04.03.2020**
(21) Anmeldenummer: 17709704.5
(22) Anmeldetag: 13.03.2017
(51) Int. Cl.: B25F 5/00, F16D 43/04, F16D 43/20, F16D 7/04, F16D 43/202, B25B 23/147

(54) **ANWENDUNGSOPTIMIERTES ABSCHALTVERHALTEN EINER ELEKTRONISCHEN RUTSCHKUPPLUNG**
USE-OPTIMIZED DEACTIVATION AN ELECTRONIC FRICTION CLUTCH
COMPORTEMENT DE COMMUTATION OPTIMISE PAR APPLICATION D'UN DISPOSITIF D'ACCOUPLEMENT A PATINAGE ELECTRONIQUE

(30) Priorität: 06.04.2016 EP 16164008
(43) Veröffentlichungstag der Anmeldung: 13.02.2019
(73) Patentinhaber: Hilti Aktiengesellschaft, 9494 Schaan (LI)
(72) Erfinder: BECKERT, Benedikt, 86159 Augsburg (DE); MEIENDRES, Germar, 86899 Landsberg (DE); SCHUBERT, Wolfgang, 86899 Landsberg (DE)
(74) Vertreter: Hilti Aktiengesellschaft Corporate Intellectual Property
(86) Internationale Anmeldenummer: PCT/EP2017/055789
(87) Internationale Veröffentlichungsnummer: WO 2017/174300

(56) Entgegenhaltungen:
- EP-A1- 2 799 170
- EP-A2- 2 527 091
- EP-A2- 2 574 425
- DE-A1-102012 204 172
- DE-A1-102012 209 447
- DE-A1-102012 218 300

## Beschreibung

Die vorliegende Erfindung betrifft ein Verfahren zum Betreiben einer Kupplung in einer Werkzeugmaschine, insbesondere eines Elektro- oder Bohrschraubers, mit einem Elektromotor, einer Steuer- und Regelvorrichtung zum Regeln und Steuern der Motorleistung der Werkzeugmaschine sowie wenigstens einem Sensor, wobei die Werkzeugmaschine in einem ersten oder zweiten Betriebsmodus betreibbar ist und in dem ersten Betriebsmodus die Betätigung der Kupplung bei einem Unterschreiten eines vorbestimmten Drehzahlschwellwerts nach einer vorbestimmten Zeitdauer erfolgt und in dem zweiten Betriebsmodus die Betätigung der Kupplung bei einem Überschreiten eines ersten vorbestimmten Motorstromschwellwerts erfolgt.

Darüber hinaus betrifft die vorliegende Erfindung eine Werkzeugmaschine betrieben mit dem vorliegenden Verfahren.

Elektro- oder Bohrschrauber dienen im Wesentlichen dazu Schrauben in unterschiedliche Werkstoffe zu schrauben. Bei diesen Werkstoffen kann es sich beispielsweise um Holz, Kunststoffe, Metall, mineralische Stoffe oder dergleichen handeln.

Wenn eine Schraube mit Hilfe des Elektro- bzw. Bohrschrauber in einen Werkstoff geschraubt werden soll, ist mit dem zunehmenden Eindringen der Schraube in den Werkstoff ein entsprechend steigender Kraftaufwand bzw. ein entsprechender Drehmomentanstieg nötig, um eine nahezu gleichbleibende Vortriebsgeschwindigkeit der Schraube zu ermöglichen. Insbesondere das sogenannte Versenken des Schraubenkopfes, d.h. das Erreichen eines bündigen Abschlusses der planen Oberfläche des Schraubenkopfes erfordert eine hohe Leistungsabgabe, d.h. einen hoher Kraftaufwand sowie ein hohes Drehmoment der Werkzeugmaschinen. Grund hierfür ist die spezielle Form des Schraubenkopfes, der für gewöhnlich eine kegelstumpfförmige Gestalt aufweist und damit einen entsprechend hohen Widerstand im Werkstoff bildet.

Ein Problem kann in diesem Zusammenhang entstehen, wenn mehrere Schrauben mit identischen Längen bündig (d.h. versenkte Schraubenköpfe) in einen nicht gleichmäßig harten Werkstoff geschraubt werden sollen. Insbesondere Holz weist oftmals keine durchgehend homogene Struktur auf, sodass der Härtegrad des Holzes sehr unterschiedlich sein kann. Bei dem Einschrauben einer ersten Schraube an einer ersten Stelle des Holzes ist es möglich, dass ein relativ geringer Kraftaufwand bzw. ein relativ geringes Drehmoment notwendig ist. An einer anderen Stelle desselben Holzes kann jedoch für ein gleichtiefes Einschrauben einer zweiten (identischen) Schraube ein wesentlich höher Kraftaufwand bzw. ein höheres Drehmoment notwendig sein. Besonders deutlich wird dieses Problem bei dem Einschrauben bzw. Versenken des kegelstumpfförmigen Schraubenkopfes.

Erschwerend kommt hinzu, dass die üblicherweise mit einem Akkumulator betriebenen Elektro- oder Bohrschrauber klein und kompakt gestaltet sein müssen, um für den Anwender praktisch zu sein. Dabei verringert sich jedoch auch die Leistungsfähigkeit der Werkzeugmaschinen.

Darüber hinaus kann ein zu frühes Auslösen der Kupplung ein Problem darstellen. Bei einem zu hohen Kraftaufwand bzw. Drehmoment für das Versenken eines Schraubenkopfes löst aufgrund der speziellen Einstellung die Kupplung frühzeitig aus (d.h. Trennt den Antriebsstrangs), sodass kein ausreichendes Drehmoment mehr an die Schraube gegeben werden kann und damit kein Vortrieben der Schraube mehr möglich ist. Der Anwender ist in einer derartigen Situation dazu gezwungen, den Schalter der Werkzeugmaschine loszulassen und erneut zu betätigen. Hierdurch wird die Kupplung deaktiviert und der Antriebsstrang geschlossen, sodass wieder das notwendige Drehmoment erzeugt werden kann, um die Schraube weiter vorzutreiben. Eine derartige Unterbrechung des Arbeitsvorgangs bedeutet jedoch eine ungewollte Verlängerung des Arbeitsvorgangs.

Aufgabe der vorliegenden Erfindung ist es daher, das vorstehend genannte Problem zu lösen und insbesondere ein ordnungsgemäßes Einschrauben von Schrauben in einen heterogenen Werkstoff mit einem nahezu gleichgroßen Kraftaufwand bzw. Drehmoment zu gewährleisten.

Die Aufgabe wird gelöst durch den Gegenstand des unabhängigen Anspruch 1 sowie entsprechend durch den Gegenstand des unabhängigen Anspruchs 4. Vorteilhafte Ausführungen sind in den Unteransprüchen enthalten.

Die Aufgabe wird dabei insbesondere gelöst durch ein Verfahren zum Betreiben einer Kupplung in einer Werkzeugmaschine, insbesondere eines Elektro- oder Bohrschraubers, mit einem Elektromotor, einer Steuer- und Regelvorrichtung zum Regeln und Steuern der Motorleistung der Werkzeugmaschine sowie wenigstens einem Sensor, wobei die Werkzeugmaschine in einem ersten oder zweiten Betriebsmodus betreibbar ist und in dem ersten Betriebsmodus die Betätigung der Kupplung bei einem Unterschreiten eines vorbestimmten Drehzahlschwellwerts nach einer vorbestimmten Zeitdauer erfolgt und in dem zweiten Betriebsmodus die Betätigung der Kupplung bei einem Überschreiten eines ersten vorbestimmten Motorstromschwellwerts erfolgt.

Erfindungsgemäß enthält das Verfahren die Verfahrensschritte:
- Einstellen des zweiten Betriebsmodus;
- Messen des Motorstroms des Elektromotors; und
- Reduzieren der Motordrehzahl von einem ersten Drehzahlwert auf einen zweiten Drehzahlwert, der höher als der vorbestimmte Drehzahlschwellwert ist, wenn ein zweiter vorbestimmter Motorstromschwellwert, der kleiner als der erste vorbestimmte Motorstromschwellwert ist, überschritten ist, wodurch ein durch die Werkzeugmaschine erzeugbares Drehmoment von einem ersten Drehmomentwert auf einen zweiten Drehmomentwert erhöht wird.

Durch die Reduzierung der Drehzahl in Abhängigkeit des Motorstroms kann ein kontinuierliches Arbeiten mit einem entsprechend hohen Drehmoment sichergestellt werden. Die reduzierte Drehzahl dient dabei außerdem für eine verringerte und damit sichere Vortriebsgeschwindigkeit, sodass einem versehentlichen zu tiefen Eindringen des Schraubenkopfes in den Werkstoff entgegengewirkt werden kann. Es ist zu beachten, dass die Werkzeugmaschine hierbei nicht ausgeschaltet wird und das bündig abschliessende Versenken des Schraubenkopfes an der Oberfläche des Werkstoffs bei einer visuellen Überwachung durch den Anwender erfolgt. Die relativ langsame Drehgeschwindigkeit ermöglicht dabei ein möglichst genaues Versenken bzw. Platzieren des Schraubenkopfes. Bei dem zweiten Drehmomentwert kann es sich um das von der Werkzeugmaschine maximal erzeugbare Drehmoment handeln.

Der erste Betriebsmodus der Werkzeugmaschine ist für einen sogenannten harten Schraubfall (auch Hard-Joint) und der zweite Betriebsmodus ist für einen sogenannten weichen Schraubfall (Soft-Joint) vorgesehen. Bei einem harten Schraubfall werden Schrauben in einen relativ harten Werkstoff (z.B. Metall) geschraubt und bei einem weichen Schraubfall werden Schrauben in einen relativ harten Werkstoff (z.B. Fichtenholz) geschraubt.

Der erste vorbestimmte Motorstromschwellwert ist dabei höher als der zweite vorbestimmte Motorstromschwellwert.

Gemäß einer vorteilhaften Ausführungsform der vorliegenden Erfindung kann ein
- Erfassen eines ersten und zweiten Positionswertes sowie eines ersten und zweiten Ausrichtungswertes für die Werkzeugmaschine mittels des wenigstens einen Sensors; und
- Reduzieren der Motordrehzahl von einem ersten Drehzahlwert auf einen zweiten Drehzahlwert, wenn eine Differenz zwischen dem ersten und zweiten Positionswert oder eine Differenz zwischen dem ersten und zweiten Ausrichtungswert einen vorbestimmten Schwellwert unterschreitet
vorgesehen sein. Hierdurch kann festgestellt werden, ob sich die Position und/oder Ausrichtung der Werkzeugmaschine während des Vorgangs des Schraubens verändert. Wenn nämlich anhand der Größe des Differenzwertes eine Veränderung der Position und/oder Ausrichtung der Werkzeugmaschine entsprechend ermittelt wird, kann davon ausgegangen werden, dass die Werkzeugmaschine von einer ersten Schraube zu einer zweiten Schraube bewegt wird und anstelle der ersten Schraube nun die zweite Schraube geschraubt wird. In diesem Falle wird die Drehzahl nicht entsprechend reduziert und kann durch den Anwender gemäß der Position des Aktivierungsschalters der Werkzeugmaschine gewählt werden. Bei einem entsprechend kleinen Differenzwert kann jedoch davon ausgegangen, dass sich die Position und/oder Ausrichtung der Werkzeugmaschine während des Vorgangs des Schraubens nicht verändert und weiterhin dieselbe Schraube geschraubt wird. In diesem Falle reduziert sich die Drehzahl und erhöht sich entsprechend das Drehmoment. Somit können in einem durchgehenden Schraubvorgang an einer Schraube durch die reduzierte Drehzahl dem Anwender zum einen ein erhöhtes Drehmoment und zum anderen eine langsame Drehgeschwindigkeit für ein genaues Versenken des Schraubenkopfes zur Verfügung gestellt.

Entsprechend einer weiteren vorteilhaften Ausführungsform der vorliegenden Erfindung kann ein
- Einstellen eines Betriebsschalters der Werkzeugmaschine in einen Aktivierungsmodus;
- Einstellen des Betriebsschalters in einen Deaktivierungsmodus;
- Einstellen eines Betriebsschalters in den Aktivierungsmodus;
- Erfassen eines ersten und zweiten Positionswertes sowie eines ersten und zweiten Ausrichtungswertes für die Werkzeugmaschine mittels des wenigstens einen Sensors; und
- Reduzieren der Motordrehzahl von einem ersten Drehzahlwert auf einen zweiten Drehzahlwert, wenn eine Differenz zwischen dem ersten und zweiten Positionswert oder eine Differenz zwischen dem ersten und zweiten Ausrichtungswert einen vorbestimmten Schwellwert unterschreitet, wobei der zweite Drehzahlwert einem Impulsbetrieb des Elektromotors entspricht
vorgesehen sein. Hierdurch kann festgestellt werden, ob sich die Position und/oder Ausrichtung der Werkzeugmaschine während des Vorgangs des Schraubens verändert. Wenn nämlich anhand der Größe des Differenzwertes eine Veränderung der Position und/oder Ausrichtung der Werkzeugmaschine entsprechend ermittelt wird, kann davon ausgegangen werden, dass die Werkzeugmaschine von einer ersten Schraube zu einer zweiten Schraube bewegt wird und anstelle der ersten Schraube nun die zweite Schraube geschraubt wird. In diesem Falle wird die Drehzahl nicht entsprechend reduziert und kann durch den Anwender gemäß der Position des Aktivierungsschalters der Werkzeugmaschine gewählt werden. Bei einem entsprechend kleinen Differenzwert kann jedoch davon ausgegangen, dass sich die Position und/oder Ausrichtung der Werkzeugmaschine während des Vorgangs des Schraubens nicht verändert und weiterhin dieselbe Schraube geschraubt wird. In diesem Falle reduziert sich die Drehzahl auf einen Impulsbetrieb und erhöht sich entsprechend das Drehmoment. Somit werden in einem durchgehenden Schraubvorgang an einer Schraube durch den Impulsbetrieb des Elektromotors dem Anwender zum einen ein erhöhtes Drehmoment und zum anderen eine langsame Drehgeschwindigkeit für ein genaues Versenken des Schraubenkopfes zur Verfügung gestellt. Mit dem Impulsbetrieb, welches eine zeitweilige bzw. wiederholende Teilumdrehung der Schraube bewirkt, kann das Versenken des Schraubenkopfes noch genauer durch den Anwender abgeschätzt bzw. überwacht werden.

Der Sensor kann dabei als Gyrosensor, Linearsensor oder dergleichen ausgestaltet sein.

Die Aufgabe wird außerdem gelöst durch eine Werkzeugmaschine betrieben mit dem erfindungsgemäßen Verfahren.

Gemäß einer vorteilhaften Ausführungsform der vorliegenden Erfindung kann für die Werkzeugmaschine vorgesehen sein, dass eine Getriebeeinrichtung mit wenigstens einem ersten und einem zweiten Gang vorgesehen ist, wobei in dem einen Gang das von der Werkzeugmaschine erzeugbare Drehmoment in einem logarithmischen Verhältnis zu einem Motorstromanstieg steht und in einem anderen Gang das von der Werkzeugmaschine erzeugbare Drehmoment in einem linearen Verhältnis zu einem Motorstromanstieg steht. Hierdurch kann in einem Gang ein im Vergleich zu dem anderen Gang höheres Drehmoment bei gleicher Drehzahl erzeugt werden, wodurch ein bündiges Versenken eines Schraubenkopfes erleichtert wird.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigt:

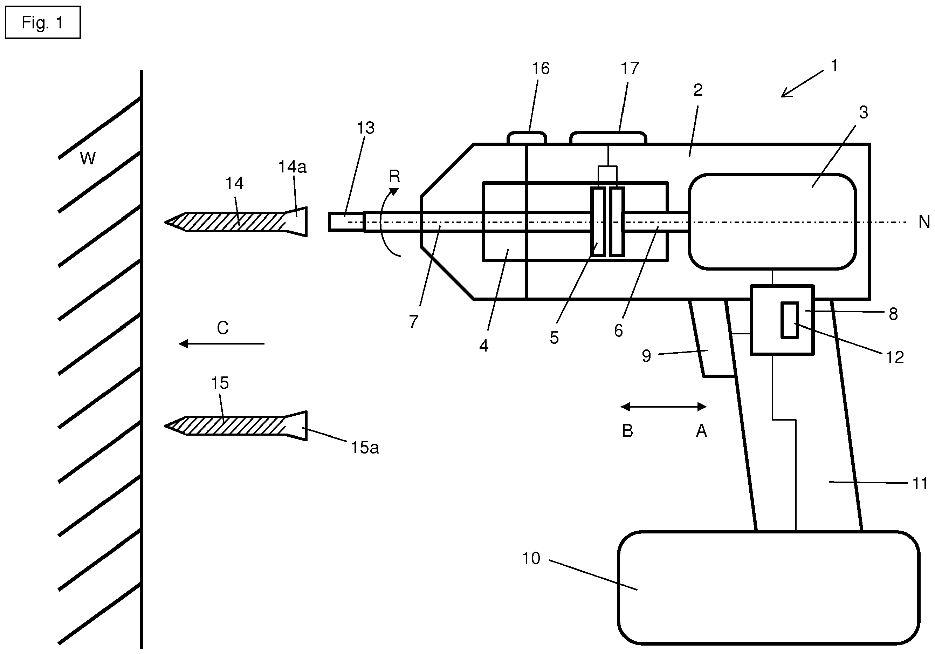

- Fig. 1: eine schematische Darstellung einer erfindungsgemäßen Werkzeugmaschine zum Betreiben des erfindungsgemäßen Verfahrens.

### Ausführungsbeispiel:

Fig. 1 zeigt eine erfindungsgemäße Werkzeugmaschine 1 zum Betreiben des erfindungsgemäßen Verfahrens.

Die Werkzeugmaschine 1 ist in Form eines Elektro- oder Bohrschraubers ausgestaltet und enthält im Wesentlichen ein Gehäuse 2, einen Elektromotor 3 als Antrieb, ein Getriebe 4 mit einer Kupplung 5, eine Antriebswelle 6, eine Abtriebswelle 7, eine Steuer- und Regelvorrichtung 8, einen Aktivierungsschalter 9 und einen Akkumulator 10.

In dem Gehäuse 2 sind der Elektromotor 3, das Getriebe 4, die Antriebswelle 6 und die Abtriebswelle 7 positioniert. An der Unterseite des Gehäuses 2 ist ein erstes Ende eines Handgriffs 11 zum Halten der Werkzeugmaschine 1 angeordnet. An dem Handgriff 11 befindet sich der Aktivierungsschalter 9 der Werkzeugmaschine 1. An einem zweiten Ende des Handgriffs 11 ist der Akkumulator 10 als Energiequelle für die Werkzeugmaschine 1 lösbar angeschlossen.

Die Steuer- und Regelvorrichtung 8 steuert und regelt unter anderen den Elektromotor 3. Hierzu ist die Steuer- und Regelvorrichtung 8 sowohl mit dem Aktivierungsschalter 9, dem Akku 10 als auch mit dem Elektromotor 3 verbunden. Insbesondere kann mit der Steuer- und Regelvorrichtung 8 der Motorstrom, die Drehzahl und das erzeugte Drehmoment gemessen, gesteuert und geregelt werden. Das Messen erfolgt dabei mit Hilfe von (in den Figuren nicht gezeigten) Sensoren.

Des Weiteren enthält die Werkzeugmaschine Sensoren 12, die verschiedene Parameter der Werkzeugmaschine messen und an die Steuer- und Regelvorrichtung 8 senden können. Bei den Sensoren 12 handelt es sich um Gyrosensoren bzw. Beschleunigungssensoren und Linearsensoren bzw. Positionssensoren. Die Sensoren 12 dienen zum Bestimmen einer Positionsveränderung bzw. Ausrichtungsänderung der Werkzeugmaschine 1.

Der Elektromotor 3 erzeugt ein Drehmoment und überträgt dieses auf die Antriebswelle 6. Die Antriebswelle 6 ist wiederum mit dem Getriebe 4 verbunden. Das Getriebe 4 enthält die Kupplung 5, die in Form einer Rutschkupplung ausgestaltet sein kann. In dem Getriebe 4 kann ein erster Gang oder ein zweiter Gang ausgewählt und eingestellt werden. Mit dem Getriebe 4 ist die Abtriebswelle 7 verbunden. Die Kupplung 5 verbindet oder trennt die Antriebswelle 6 mit bzw. von der Abtriebswelle 7. An dem freien Ender 7a der Abtriebswelle 7 ist ein Bit 13 (der Bit kann auch als Schraubendreherklinge bezeichnet werden) befestigt. Der Bit 13 kann in ein Schraubenkopfprofil 14a, 15a einer Schraube 14, 15 (z.B. Schlitz, Kreuz oder dergleichen) eingeführt werden.

Mit Hilfe des Elektromotors 3 wird ein Drehmoment erzeugt. Das erzeugte Drehmoment wird auf die Antriebswelle 6, das Getriebe 4, die Kupplung 5, die Abtriebswelle 7 und schließlich auf den Bit 13 übertragen. Wenn der Bit 13 in dem Schraubenkopfprofil 14a, 15a der Schraube 14, 15 eingeführt ist, wird das von dem Elektromotor 3 erzeugte Drehmoment auf die Schraube 14, 15 übertragen und die Schraube 14, 15 wird in eine Drehrichtung R um eine Mittelachse N gedreht. Durch das auf die Schraube 14, 15 wirkende Drehmoment kann die Schraube 14, 15 in den Werkstoff W eindringen und in diesem befestigt werden.

Die Aktivierung der Kupplung 5 ist abhängig von dem gemessenen Motorstrom. Der Motorstrom ist dabei eine Funktion des von dem Elektromotor 3 erzeugten Drehmoments. Somit kann durch das Erfassen des Motorstroms das von dem Elektromotor 3 erzeugte Drehmoment ermittelt werden. Wenn der gemessene Motorstrom einen vorbestimmten Wert übersteigt, wird die Kupplung 5 aktiviert, d.h. die Antriebwelle 6 und die Abtriebswelle 7 voneinander getrennt. Die Werkzeugmaschine 1 ist dabei so ausgestaltet, dass in dem ersten Gang das von der Werkzeugmaschine 1 erzeugte Drehmoment in einem logarithmischen Verhältnis zu einem Motorstromanstieg steht und in einem zweiten Gang das von der Werkzeugmaschine 1 erzeugbare Drehmoment in einem linearen Verhältnis zu einem Motorstromanstieg steht. Hierdurch kann in dem ersten Gang ein höheres Drehmoment als im zweiten Gang bei einem identischen Motorstrom erzeugt werden, ohne dass die Kupplung 5 die Antriebwelle 6 und die Abtriebswelle 7 trennt.

Wenn eine Schraube 14, 15 in einen Werkstoff W geschraubt werden soll, wird zunächst mit Hilfe eines Auswahlschalters 16 ein Gang für das Getriebe 4 gewählt. Es kann dabei ein erster oder ein zweiter Gang gewählt werden. Es ist jedoch auch in einer alternativen Ausgestaltung möglich, dass mehr als zwei Gänge wählbar sind.

Anschließend wird der entsprechende Betriebsmodus gewählt. Es kann zwischen dem ersten Betriebsmodus für einen weichen Schraubfall und dem zweiten Betriebsmodus für einen harten Schraubfall gewählt werden. Im vorliegenden Fall wird der zweite Betriebsmodus gewählt, wobei in dem zweiten Betriebsmodus die Betätigung der Kupplung 5 bei einem Überschreiten eines ersten vorbestimmten Motorstromschwellwerts erfolgt.

Die Auswahl des ersten oder zweiten Betriebsmodus erfolgt mittels eines Auswahlschalters. Der Auswahlschalter ist in den Figuren nicht dargestellt.

Als nächstes wird die Auslösebedingung der Kupplung 5 mit Hilfe einer Einstellvorrichtung 17 eingestellt. Durch diese Einstellung wird bestimmt, ab welchem Drehmoment, das von dem Elektromotor 3 erzeugt und auf die Schraube 14, 15 übertragen wird, die Kupplung 5 die Antriebwelle 6 und die Abtriebswelle 7 trennen soll. Wie vorstehend beschrieben wird das Drehmoment anhand des Motorstroms ermittelt.

Eine erste Schraube 14 wird nun mit Hilfe des Bits 13 in den Werkstoff W geschraubt. Die Aktivierung des Werkzeugmaschine 1 bzw. des Elektromotors 3 erfolgt durch Betätigen (Drücken) des Aktivierungsschalters 9. Der Aktivierungsschalter 9 wird hierzu in Pfeilrichtung A bewegt. Um die Werkzeugmaschine 1 auszuschalten bzw. den Elektromotor 3 zu stoppen, wird der Aktivierungsschalter 9 in Pfeilrichtung B bewegt. Die Bewegung in Pfeilrichtung B erfolgt durch eine nicht gezeigte Feder. Die entsprechenden Sensoren messen dabei ständig den Motorstrom. Wenn das von dem Motorstrom abgeleitete Drehmoment nicht einen zuvor festgelegten Schwellwert übersteigt, wird die Schraube 14 bis zum Anschlag in den Werkstoff W in Richtung C geschraubt. Für gewöhnlich ist für das bündige Versenken des Schraubenkopfes 14a das höchste Drehmoment notwendig, da dieser durch seine Kegelstumpfform den größten Widerstand in dem Werkstoff W erzeugt.

Nachdem die erste Schraube 14 in den Werkstoff W geschraubt ist, wird eine zweite Schraube 15 an einer anderen Stelle in den Werkstoff W geschraubt. Es ist dabei möglich, dass die zweite Schraube 15 an einer Stelle eingeschraubt werden soll, an der der Werkstoff W härter ist als an der Stelle der ersten Schraube 14. In diesem Fall ist dann ein höheres Drehmoment für das Einschrauben notwendig. Wenn bei dem Einschrauben der zweiten Schraube 15 an einer harten Stelle des Werkstoffs W der Schwellwert für den Motorstrom, mit dem das erzeugte Drehmoment ermittelt werden kann, überschritten wird, wird die Kupplung 5 nicht aktiviert und trennt damit nicht die Antriebwelle 6 und die Abtriebswelle 7. Stattdessen wird die Drehzahl des Elektromotors reduziert, sodass das Drehmoment entsprechend erhöht werden kann. Durch das erhöhte Drehmoment kann die zweite Schraube 15 und insbesondere der Schraubenkopf 15a auch in einen härten Werkstoff W bündig geschraubt werden. Der Anwender der Werkzeugmaschine 1 muss hierbei den Aktivierungsschalter 9 nicht loslassen (in Pfeilrichtung B), sondern kann diesen gedrückt halten (in Pfeilrichtung A), da die Reduzierung der Drehzahl und damit die Erhöhung des Drehmoments automatisch stattfinden. Durch die niedrige Drehzahl und dem damit verbundenen langsamen Vordringen der Schraube 14, 15 in dem Werkstoff W ist es dem Anwender außerdem möglich leichter zu beobachten, wann die Schraube 14, 15 bzw. der Schraubenkopf 14a, 15a an der Oberfläche des Werkstoffs W bündig anliegt. Ein zu tiefes Eindringen der Schraube 14, 15 in den Werkstoff W kann damit verhindert werden.

Nachfolgend wird eine alternative Ausführungsform der vorliegenden Erfindung beschrieben.

In dem Fall, dass ein zu hohes Drehmoment für das Einschrauben notwendig ist und dies anhand eines über einen Schwellwert liegenden Motorstroms ermittelbar ist, wird der Elektromotor 3 vollständig gestoppt. Daraufhin lässt der Anwender den Aktivierungsschalter 9 los (in Pfeilrichtung B) und betätigt ihn anschließend wieder (in Pfeilrichtung A). Die Sensoren 12, d.h. die Gyrosensoren bzw. Beschleunigungssensoren und die Linearsensoren bzw. Positionssensoren, ermitteln jedoch keine Position- oder Ausrichtungsveränderung der Werkzeugmaschine 1. Dies bedeutet, dass die Werkzeugmaschine 1 nicht von der Schraube 14, 15 wegbewegt wurde und dass weiterhin dieselbe Schraube 14, 15 geschraubt werden soll. Hierdurch wird der Steuer- und Regelvorrichtung 8 angezeigt, dass der Elektromotor 3 mit einer niedrigen Drehzahl drehen und ein entsprechend hohes Drehmoment erzeugt werden soll. Alternativ kann der Elektromotor 3 anstelle mit einer reduzierten Drehzahl auch mit einem Impuls- oder Pulsbetrieb betrieben werden. Bei dem Impuls- oder Pulsbetrieb dreht sich die Abtriebswelle 7 lediglich in Viertelumdrehungen um die Mittelachse N. Hierdurch wird ebenfalls das Drehmoment erhöht und das Einschrauben der Schraube 14, 15 sowie das bündige Versenken des Schraubenkopfes 14a, 15a kann fortgesetzt werden.

Wenn jedoch die Sensoren 12, d.h. die Gyrosensoren bzw. Beschleunigungssensoren und die Linearsensoren bzw. Positionssensoren, eine Position- oder Ausrichtungsveränderung der Werkzeugmaschine 1 ermitteln (d.h. anhand des Überschreitens eines Schwellwerts bzw. anhand des Überschreitens eines Differenzwert von einem ersten und zweiten Positions- oder Ausrichtungswert) kann davon ausgegangen werden, dass die Werkzeugmaschine 1 von einer Schraube 14 zu einer anderen Schraube 15 bewegt wurde. Folglich wird nicht mehr an derselben Schraube 14 geschraubt. In einem derartigen Fall wird, wenn der Anwender den Aktivierungsschalter 9 loslässt (in Pfeilrichtung B) und ihn anschließend wieder betätigt (in Pfeilrichtung A), die Drehzahl des Elektromotors 3 nicht reduziert und auch kein Impuls- oder Pulsbetrieb eingestellt. Die neue Schraube 15 kann nun wieder mit dem vollen Drehzahlbereich geschraubt werden.

## Patentansprüche

1. Verfahren zum Betreiben einer Kupplung (5) in einer Werkzeugmaschine (1), insbesondere eines Elektro- oder Bohrschraubers, mit einem Elektromotor (3), einer Steuer- und Regelvorrichtung (8) zum Regeln und Steuern der Motorleistung der Werkzeugmaschine (1) sowie wenigstens einem Sensor (12), wobei die Werkzeugmaschine (1) in einem ersten oder zweiten Betriebsmodus betreibbar ist und in dem ersten Betriebsmodus die Betätigung der Kupplung (5) bei einem Unterschreiten eines vorbestimmten Drehzahlschwellwerts nach einer vorbestimmten Zeitdauer erfolgt und in dem zweiten Betriebsmodus die Betätigung der Kupplung (5) bei einem Überschreiten eines ersten vorbestimmten Motorstromschwellwerts erfolgt,
**gekennzeichnet durch** die Verfahrensschritte
- Einstellen des zweiten Betriebsmodus;
- Messen des Motorstroms des Elektromotors (3); und
- Reduzieren der Motordrehzahl von einem ersten Drehzahlwert auf einen zweiten Drehzahlwert, der höher als der vorbestimmte Drehzahlschwellwert ist, wenn ein zweiter vorbestimmter Motorstromschwellwert, der kleiner als der erste vorbestimmte Motorstromschwellwert ist, überschritten ist, wodurch ein durch die Werkzeugmaschine (1) erzeugbares Drehmoment von einem ersten Drehmomentwert auf einen zweiten Drehmomentwert erhöht wird.

2. Verfahren nach Anspruch 1,
**gekennzeichnet durch** den Verfahrensschritt
- Erfassen eines ersten und zweiten Positionswertes sowie eines ersten und zweiten Ausrichtungswertes für die Werkzeugmaschine (1) mittels des wenigstens einen Sensors (12); und
- Reduzieren der Motordrehzahl von einem ersten Drehzahlwert auf einen zweiten Drehzahlwert, wenn eine Differenz zwischen dem ersten und zweiten Positionswert oder eine Differenz zwischen dem ersten und zweiten Ausrichtungswert einen vorbestimmten Schwellwert unterschreitet.

3. Verfahren nach Anspruch 1,
**gekennzeichnet durch** den Verfahrensschritt
- Einstellen eines Aktivierungsschalter (9) der Werkzeugmaschine (1) in einen Aktivierungsmodus;
- Einstellen des Aktivierungsschalter (9) in einen Deaktivierungsmodus;
- Einstellen eines Aktivierungsschalter (9) in den Aktivierungsmodus;
- Erfassen eines ersten und zweiten Positionswertes sowie eines ersten und zweiten Ausrichtungswertes für die Werkzeugmaschine (1) mittels des wenigstens einen Sensors (12); und
- Reduzieren der Motordrehzahl von einem ersten Drehzahlwert auf einen zweiten Drehzahlwert, wenn eine Differenz zwischen dem ersten und zweiten Positionswert oder eine Differenz zwischen dem ersten und zweiten Ausrichtungswert einen vorbestimmten Schwellwert unterschreitet, wobei der zweite Drehzahlwert einem Impulsbetrieb des Elektromotors (3) entspricht.

4. Werkzeugmaschine (1) betrieben mit dem Verfahren nach wenigstens einem der Ansprüche 1 bis 3.

5. Werkzeugmaschine (1) nach Anspruch 4,
**dadurch gekennzeichnet, dass** eine Getriebe (4) mit wenigstens einem ersten und einem zweiten Gang vorgesehen ist, wobei in dem einen Gang das von der Werkzeugmaschine (1) erzeugbare Drehmoment in einem logarithmischen Verhältnis zu einem Motorstromanstieg steht und in einem anderen Gang das von der Werkzeugmaschine (1) erzeugbare Drehmoment in einem linearen Verhältnis zu einem Motorstromanstieg steht.

## Claims

1. Method for operating a clutch (5) in a power tool (1), in particular an electric screwdriver or drill driver, having an electric motor (3), an open-loop and closed-loop control device (8) for open-loop and closed-loop control of the motor power of the power tool (1) and having at least one sensor (12), the power tool (1) being operable in a first or second operating mode and, in the first operating mode, the clutch (5) being actuated when the speed falls below a predetermined speed threshold value after a predetermined period of time and, in the second operating mode, the clutch (5) being actuated when a first predetermined motor current threshold value is exceeded,
**characterized by** the method steps of
- setting the second operating mode;
- measuring the motor current of the electric motor (3); and
- reducing the engine speed from a first speed value to a second speed value which is higher than the predetermined speed threshold value when a second predetermined motor current threshold value which is smaller than the first predetermined motor current threshold value is exceeded, as a result of which a torque which can be produced by the power tool (1) is increased from a first torque value to a second torque value.

2. Method according to claim 1, **characterized by** the method steps of
- detecting a first and second position value and a first and second alignment value for the power tool (1) by means of the at least one sensor (12); and
- reducing the motor speed from a first speed value to a second speed value when a difference between the first and second position value or a difference between the first and second alignment value falls below a predetermined threshold value.

3. Method according to claim 1, **characterized by** the method steps of
- setting an activation switch (9) of the power tool (1) into an activation mode;
- setting the activation switch (9) into a deactivation mode;
- setting an activation switch (9) into the activation mode;
- detecting a first and second position value and a first and second alignment value for the power tool (1) by means of the at least one sensor (12); and
- reducing the motor speed from a first speed value to a second speed value when a difference between the first and second position value or a difference between the first and second alignment value falls below a predetermined threshold value, the second speed value corresponding to a pulse operation of the electric motor (3).

4. Power tool (1) operated using the method according to at least one of claims 1 to 3.

5. Power tool (1) according to claim 4, **characterized in that** a transmission (4) having at least one first and one second gear is provided, the torque which can be produced by the power tool (1) having a logarithmic relationship with a motor current increase in one gear and the torque which can be produced by the power tool (1) having a linear relationship with a motor current increase in another gear.

## Revendications

1. Procédé pour faire fonctionner un embrayage (5) dans une machine d'usinage (1), notamment un tournevis électrique ou une perceuse, comportant un moteur électrique (3), un dispositif de commande et de régulation (8) permettant de réguler et de commander la puissance du moteur de la machine d'usinage (1) et au moins un capteur (12), la machine d'usinage (1) pouvant fonctionner dans un premier ou un second mode de fonctionnement, et dans le premier mode de fonctionnement, l'actionnement de l'embrayage (5) en cas de sous-dépassement d'une valeur seuil de vitesse prédéterminée après une période de temps prédéterminée, et dans le second mode de fonctionnement, l'actionnement de l'embrayage (5) a lieu en cas de dépassement d'une première valeur seuil prédéterminée de courant de moteur, **caractérisé par** les étapes de procédé
- de réglage du second mode de fonctionnement ;
- de mesure du courant de moteur du moteur électrique (3) ; et
- de réduction de la vitesse du moteur d'une première valeur de vitesse à une seconde valeur de vitesse supérieure à la valeur seuil de vitesse prédéterminée lorsqu'une seconde valeur seuil prédéterminée de courant de moteur plus petite que la première valeur seuil prédéterminée de courant de moteur est dépassée, moyennant quoi un couple pouvant être produit par la machine d'usinage (1) est augmenté d'une première valeur de couple à une seconde valeur de couple.

2. Procédé selon la revendication 1, **caractérisé par** les étapes de procédé
- de détection d'une première et d'une seconde valeur de position, et d'une première et d'une seconde valeur d'orientation de la machine d'usinage (1) au moyen de l'au moins un capteur (12) ; et
- de réduction de la vitesse du moteur d'une première valeur de vitesse à une seconde valeur de vitesse lorsqu'une différence entre la première et la seconde valeur de position ou une différence entre la première et la seconde valeur d'orientation tombe en-dessous d'une valeur seuil prédéterminée.

3. Procédé selon la revendication 1, **caractérisé par** l'étape de procédé
- de réglage d'un commutateur d'activation (9) de la machine d'usinage (1) dans un mode d'activation ;
- de réglage du commutateur d'activation (9) en mode de désactivation ;
- de réglage d'un commutateur d'activation (9) en mode d'activation ;
- de détection d'une première et d'une seconde valeur de position, et d'une première et d'une seconde valeur d'orientation pour la machine d'usinage (1) au moyen de l'au moins un capteur (12) ; et
- de réduction de la vitesse du moteur d'une première valeur de vitesse à une seconde valeur de vitesse lorsqu'une différence entre la première et la seconde valeur de position ou une différence entre la première et la seconde valeur d'orientation tombe en-dessous d'une valeur seuil prédéterminée, la seconde valeur de vitesse correspondant à un fonctionnement impulsionnel du moteur électrique (3).

4. Machine d'usinage (1) actionnée par le procédé selon au moins l'une des revendications 1 à 3.

5. Machine d'usinage (1) selon la revendication 4, **caractérisée en ce qu'**une transmission (4) est pourvue d'au moins une première et une seconde vitesses, dans laquelle, dans l'une des vitesses, le couple pouvant être généré par la machine d'usinage (1) se trouve dans un rapport logarithmique par rapport à une augmentation de courant de moteur, et dans une autre vitesse, le couple pouvant être généré par la machine d'usinage (1) se trouve dans un rapport linéaire par rapport à une augmentation de courant de moteur.
